# EUROPÄISCHE PATENTSCHRIFT

(11) **EP 3 386 915 B1**
(45) Veröffentlichungstag und Bekanntmachung des Hinweises auf die Patenterteilung: **24.08.2022**
(21) Anmeldenummer: 16809723.6
(22) Anmeldetag: 06.12.2016
(51) Int. Cl.: C01B 33/00, C09C 1/00, F17C 13/00

(54) **VERFAHREN ZUR WÄRMEDÄMMUNG EINES EVAKUIERBAREN BEHÄLTERS**
METHOD FOR THE THERMAL INSULATION OF AN EVACUATABLE CONTAINER
PROCÉDÉ D'ISOLATION THERMIQUE D'UN RÉCIPIENT POUVANT ÊTRE MIS SOUS VIDE

(30) Priorität: 10.12.2015 EP 15199262
(43) Veröffentlichungstag der Anmeldung: 17.10.2018
(73) Patentinhaber: Evonik Operations GmbH, 45128 Essen (DE)
(72) Erfinder: SCHÄFFNER, Dirk, 63512 Hainburg (DE); SCHULTZ, Thorsten, 64739 Hassenroth (DE); GEISLER, Matthias, 37176 Nörten-Hardenberg (DE); ASBAHR, Hark-Oluf, 67161 Gönnheim (DE); MENZEL, Frank, 63456 Hanau (DE); HERR, Ann-Kathrin, 63450 Hanau (DE)
(74) Vertreter: Evonik Patent Association
(86) Internationale Anmeldenummer: PCT/EP2016/079901
(87) Internationale Veröffentlichungsnummer: WO 2017/097768

(56) Entgegenhaltungen:
- EP-A1- 0 645 576
- EP-A1- 2 910 724
- EP-A2- 0 990 406
- WO-A2-2012/031872
- US-A- 3 532 473

## Beschreibung

Die Erfindung betrifft ein Verfahren zur Wärmedämmung eines doppelwandigen, evakuierbaren Behälters.

In der EP-A-645576 wird ein Verfahren zum Füllen und Komprimieren eines wärmeisolierenden Pulvers in die Wände eines Formkörpers beschrieben. Dabei wird zunächst das Pulver eingeblasen und anschließend der Formkörper evakuiert.

In der EP-A-990406 wird ein Isoliergehäuse beschrieben, welches aus einem doppelwandigen, vakuumdichten Gehäuse mit einer den Zwischenraum ausfüllenden, gestützten Vakuum-Isolierung besteht, wobei der Stützkörper aus einer rieselfähigen, granulat- oder pulverförmigen pyrogenen Kieselsäure besteht.

In der WO2012031872 wird ein Verfahren zum Fertigen eines wärmeisolierenden Formkörpers offenbart, welches die Schritte Bereitstellen einer Hohlform, Einfüllen eines schüttfähigen porösen Materials in die Hohlform, Verfestigen des schüttfähigen porösen Materials in der Hohlform und Evakuieren und Verschließen der Hohlform. Das schüttfähige Material ist nicht weiter beschränkt. So kann zum Beispiel ein Granulat aus einem offenporigen Kunststoff-Hartschaum, ein Aerogel, ein Zeolith oder eine Kieselsäure eingesetzt werden.

Beikircher et al. beschreiben in ihrem Abschlussbericht "Superisolierter Heisswasser-Langzeitwärmespeicher" (Fkz: 0325964A) vom 30.04.2013 den Aufbau eines superisolierten Speichers. Der Speicher besteht aus einem Außen- und einem Innentank aus Stahl, der Ringspalt zwischen den beiden Tanks wird ins Feinvakuum unter 0,1 mbar evakuiert. In den Ringspalt wird mikroporöser, geblähter Perlit mit einer Schüttdichte von 30-240 kg/m³ eingebracht.

EP 2910724 A1 offenbart ein mit einem wärmedämmenden Material gefülltes Hohlprofil eines Rahmens, bevorzugt eines Fensterrahmens. Das wärmedämmende Material kann ein Pulver, eine Pulvermischung oder ein Granulat sein. Die Befüllung des Hohlprofils kann in EP 2910724 A1 erfolgen, indem man im Hohlprofil einen Unterdruck erzeugt, und das wärmedämmende Material darin "einsaugt", d.h. das evakuierte Hohlprofil mit dem unter normalen Bedingungen stehenden wärmedämmenden Material verbindet und somit in das Hohlprofil überführt.

Die im Stand der Technik genannten Verfahren zur Wärmedämmung von evakuierbaren Behältern sind noch verbesserungswürdig. Als Einsatzstoffe werden pulverförmige Stoffe sowie Granulate eingesetzt. Pulverförmige Materialen versprechen eine bessere Wärmedämmung, weisen jedoch keine ausreichende Fließfähigkeit auf, so dass ein Befüllvorgang entweder nicht möglich oder sehr zeitintensiv ist. Zudem ergeben sich Probleme mit einer gleichförmigen Befüllung und dem Absetzverhalten. Granulate hingegen sind leicht zu fördern, weisen jedoch eine niedrigere Wärmedämmung als die Pulver gleicher chemischer Zusammensetzung auf.

Aufgabe der vorliegenden Erfindung war es daher ein einfach durchzuführendes Verfahren zur Befüllung der Hohlräume eines evakuierbaren Behälters mit einem wärmedämmenden Material bereitzustellen, welches die genannten Nachteile minimiert.

Gegenstand der Erfindung ist ein Verfahren zur Wärmedämmung eines Behälters, beispielsweise eines Kryobehälters, der einen evakuierbaren Hohlraum (1) umfasst, wobei der Hohlraum durch einen Aussenbehällter (2) und einen Innenbehälter (3) gebildet wird, umfassend die Schritte Evakuieren des Hohlraumes auf einen Druck von 100 hPa bis 10⁻⁴ hPa,
Einbringen eines verdichteten Pulvers und Verschließen des Hohlraumes, wobei
zunächst der Hohlraum (1) evakuiert wird und nachfolgend das verdichtete Pulver in den evakuierten Hohlraum eingebracht wird,
das Einbringen des verdichteten Pulvers in den evakuierten Hohlraum (1) aus einer evakuierten Vorlage (4) erfolgt, in der ein Druck vorliegt, der größer ist als im evakuierten Hohlraum und.
das verdichtete Pulver eine hydrophobierte, pyrogene Kieselsäure umfasst und eine Stampfdichte von 100-150 g/l aufweist. Die Stampfdichte wird bestimmt nach ISO 697 / EN ISO 60; DIN 53468.

Das verdichtete Pulver weist bevorzugt eine Wärmeleitfähigkeit von weniger als 5 mW/m·K bei einem Druck von 100 hPa oder weniger oder weniger als 25 mW/m·K bei einem Druck von 1000 hPa auf. Das verdichtete Pulver unterscheidet sich von einem Granulat hinsichtlich seiner Stampfdichte und seines Fließverhaltens. So weist ein Granulat eine Stampfdichte von mehr als 150 g/l und gute Fließeigenschaften auf.

Bei dem erfindungsgemäßen Verfahren erfolgt das Einbringen des verdichteten Pulvers in den evakuierten Hohlraum aus einer evakuierten Vorlage (4), in der ein Druck vorliegt, der größer ist als im evakuierten Hohlraum (1). Das Einbringen kann beispielsweise durch Öffnen eines Ventils, welches in einem Verbindungsstück (5) zwischen evakuierter Vorlage und evakuiertem Hohlraum angeordnet ist, erfolgen. Nach der Befüllung des evakuierten Hohlraumes kann der Gasdruck durch Evakuieren erneut verringert werden.

Es kann zudem hilfreich sein, das Einbringen des verdichteten Pulvers in den evakuierten Hohlraum durch Vibration zu beschleunigen.

Bei dem erfindungsgemäßen Verfahren werden hydrophobierte, pyrogen hergestellte Kieselsäuren eingesetzt. Pyrogene Kieselsäuren liegen in der Regel in aggregierter Form oder wenigstens teilweise aggregiert vor. Unter "aggregiert" ist zu verstehen, dass sogenannte Primärpartikel, die bei der Genese zunächst entstehen, sich im weiteren Reaktionsverlauf fest miteinander unter Bildung eines dreidimensionalen Netzwerkes verbinden. Die Beschreibung "wenigstens teilweise aggregiert" soll klarstellen, dass das Vorliegen neben Aggregaten auch isolierte Einzelpartikeln vorliegen können, wobei wenigstens 80% der hydrophobierten Siliciumdioxidpartikel in Form von Aggregaten vorliegen sollten. Eine solche Kieselsäure weist gute Werte bezüglich der Wärmedämmung als auch der mechanischen Stabilität des dreidimensionalen Netzwerkes auf. Das Verhältnis Aggregat zu isoliertem Einzelpartikel kann beispielsweise durch quantitative Auswertung von TEM-Aufnahmen (TEM = Transmissionselektronen-Mikroskopie) ermittelt werden. Die Siliciumdioxidpartikel sind amorph.

Pyrogen umfasst die Herstellung der Kieselsäure mittels Flammenhydrolyse und Flammenoxidation. Dabei werden oxidierbare und/oder hydrolysierbare Ausgangstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet ist Siliciumtetrachlorid. Die so erhaltene hydrophile Kieselsäure ist weitestgehend porenfrei und weist auf ihrer Oberfläche freie Hydroxylgruppen auf. Die BET-Oberfläche pyrogener Kieselsäure beträgt in der Regel 30 - 500 m²/g. Für das erfindungsgemäße Verfahren ist insbesondere eine BET-Oberfläche von wenigstens 150 m²/g bevorzugt.

Hydrophobierte Kieselsäuren werden aus der Reaktion von hydrophilen Kieselsäuren mit einem Hydrophobierungsmittel erhalten. Dabei werden die an der Oberfläche der hydrophilen Kieselsäure vorliegenden Hydroxylgruppe teilweise oder vollständig umgesetzt. Der Grad der Hydrophobierung kann durch die Methanolbenetzbarkeit bestimmt werden.

So sollte die Kieselsäure eine Methanolbenetzbarkeit von wenigstens 20 Vol.-% Methanol, bevorzugt 20 - 80 Vol.-% Methanol, aufweisen. Hydrophobe Kieselsäuren lassen sich durch Zusatz von Methanol wasserbenetzbar machen. Dies erfolgt durch Methanol/Wasser - Gemische unterschiedlicher Konzentration. Es lassen sich so Aussagen über den Hydrophobierungsgrad der Kieselsäuren treffen.

Bei der Bestimmung der Methanolbenetzbarkeit geht man wie folgt vor: In 6 gleiche Zentrifugengläser von 15 ml Inhalt werden jeweils 200 mg hydrophobe Kieselsäure eingewogen und jedes der Gläser mit 8 ml eines Methanol-Wasser-Gemisches steigender MethanolKonzentration versetzt. Die Methanolkonzentration der Gemische richtet sich nach der zu erwartenden Methanolbenetzbarkeit. Die Zentrifugengläser werden dicht verschlossen und dann kräftig geschüttelt. Zur Abtrennung der benetzten Kieselsäure werden die Gläser dann 5 Minuten bei 2500 UpM zentrifugiert. Die benetzten Anteile bilden einen Bodensatz, dessen Volumina an der Skala der Zentrifugengläser abgelesen werden. Die Sediment-Volumina werden in einer Graphik gegen die Methanol/Wasser-Gemisch-Konzentration aufgetragen.

Die einzelnen Messpunkte ergeben eine Kurve (x-Achse: prozentualer Anteil an Methanol der Methanol/Wasser-Gemische, y-Achse: Höhe des Sediments), deren Lage und Steilheit den Hydrophobierungsgrad der Fällungskieselsäure charakterisiert.

Als Maß für die Hydrophobierung wird der x-Achsen-Wert (in Vol.-% Methanol) am Wendepunkt der Kurve angegeben.

Besonders geeignet sind hydrophobierte Kieselsäuren, die durch Reaktion einer hydrophilen Kieselsäure mit einem Organosilan erhalten werden, wobei das Organosilan aus der Gruppe bestehend aus Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, mit n = 1-8; R = -H, -CH₃, -C₂H₅; X= -Cl, -Br; -OCH₃, -OC₂H₅,-OC₃H₈, Y= NH, O ausgewählt ist.

Durch ihre hydrophoben Eigenschaften wird sichergestellt, dass kein oder nur geringe Mengen anhaftenden Wassers in den zu befüllenden Hohlraum eingebracht wird. Anhaftendes Wasser kann zu einer unerwünschten Reduzierung des Vakuums und damit zu einer erhöhten Wärmeleitfähigkeit. führen. Daher ist es wichtig, die wärmedämmenden Materialien in möglichst wasserfreiem Zustand einzubringen. Dies kann zwar durch Trocknungsverfahren oder nachträgliche Reduzierung des Druckes erreicht werden, was aber den Befüllvorgang deutlich verlangsamt und zu einer deutlichen Verteuerung des Verfahrens führt.

Bevorzugt wird das verdichtete Pulver als Gemisch einer Kieselsäure und eines IR-Trübungsmittels eingesetzt. Besonders bevorzugt ist ein Anteil von 60-95 Gew-.% einer Kieselsäure und 5-40 Gew.-% eines IR-Trübungsmittels. Geeignete IR-Trübungsmittel sind Titanoxide, Zirkonoxide, Ilmenite, Eisentitanate, Eisenoxide, Zirkonsilikate, Siliciumcarbid, Manganoxide, Graphite und/oder Ruße. Die Partikelgröße der Trübungsmittel liegt in der Regel zwischen 0,1 und 25 µm. Bei Siliciumcarbid und Titanoxiden ist der mittlere Partikeldurchmesser dso bevorzugt 1 bis 10 µm, besonders bevorzugt 2 bis 8 µm.

### Beispiele

### Einsatzstoffe

80 Ma.-% AEROSIL^{®} R 974, Evonik Industries, BET-Oberfläche: ca. 170 m²/g, Methanolbenetzbarkeit ca. 30 Vol.-% MeOH; erhältlich durch Umsetzung eines pyrogenen Kieselsäure mit einer BET-Oberfläche von ca. 200 m²/g mit Dimethyldichlorsilan. 20 Ma.-% Siliziumcarbid dso ca. 5 µm; Firma ESK.

### Herstellung von Granulaten (Vergleichsbeispiele)

Die Einsatzstoffe werden in einen Vorlagebehälter gefördert. Die Granulierung erfolgt mittels eines Walzenkompaktors BEPEX 200/50P, ausgestattet mit einem Vakuumtrichter und -kammerstück zur Vorentlüftung der Einsatzstoffe. Der Anpressdruck der Walzen wird über die Stopfschneckendrehzahl geregelt. Direkt unter dem Kompaktor ist ein Siebgranulator (Frewitt Typ MG633) installiert. Die aufgebrochenen Schülpen wurden direkt auf die Siebmaschine aufgegeben. Der Feinanteil der gebrochenen Schülpen wurde mit einer Siebmaschine abgetrennt und mit der Feinanteilrückführung wieder der Granulierung zugeführt.

Prozessparameter und physikalische Daten der Granulate sind in Tabelle 1 wiedergegeben.

### Herstellung der verdichteten Pulver

Die Herstellung erfolgt in zwei Prozessschritten.

1. Mischung von AEROSIL^{®} R 974, Evonik Industries und Siliciumcarbid dso ca. 5 µm; Fa. ESK Die Mischung wird mit Hilfe eines Nauta-Mischer hergestellt.

AEROSIL^{®} R 974 wird vorgelegt, Siliciumcarbid wird zudosiert. Das Material wird für 30 bis 60 Minuten bei maximaler Drehzahl des Mischers gemischt. Die Prozessparameter und Einsatzstoffe sind in der Tabelle 2 dargestellt. Die Stampfdichte der Mischung beträgt 66 g/l.

2. Verdichtung der Mischung auf die gewünschte Stampfdichte

Die Verdichtung der Mischung erfolgt mit Hilfe eines Walzenverdichters Vacupress VP 220/300, Fa. Grenzebacher. Die Stampfdichte des Produktes wird durch die Spaltbreite, die Walzendrehzahl und das Vakuum geregelt.

### Fließverhalten

Das jeweilige Versuchsmaterial, verdichtetes Pulver und Granulate werden in einen verschlossen Auslauftrichter gefüllt. Anschließend wird der Auslauf geöffnet und das Fließverhalten und der Durchfluss, bei einem bestimmten Durchmesser, ermittelt.

Die Proben des verdichteten Pulvers weisen eine sehr gute bis befriedigende Fließfähigkeit auf. Gegebenenfalls kann die Fließfähigkeit durch Vibration verbessert werden. Dies kann insbesondere bei Stampfdichten von weniger als 130 g/l sinnvoll sein.

Die Granulate zeigen ein erwartet gutes Fließverhalten, während die eingesetzte Mischung aus AEROSIL^{®} R 974 und Siliciumcarbid, nicht verdichtet, auch bei Vibration, nicht fließt.

### Wärmeleitfähigkeit

Die Wärmeleitfähigkeit der verdichteten Pulver und der Granulate erfolgt mit Hilfe der HOT DISK TPS 2500 S gemessen. Die Methode arbeitet instationär. Ein flächiger Sensor (5501; 6,4 mm Radius) dient als Wärmequelle und als Temperaturfühler zugleich. Er wird in der Mitte der Schüttung platziert. Aus dem Verlauf der Temperaturänderung über die Zeit während eines Heizimpulses wird die Wärmeleitfähigkeit der Probe ermittelt.

Die Proben werden 24 Stunden bei 150°C im Vakuum ausgeheizt. Danach wird die Wärmeleitfähigkeit unter Vakuum (<10⁻² mbar) und bei ca. 1 bar abs unter Stickstoffatmosphäre gemessen. Die Temperatur und die Leistung während der Messungen sind konstant und liegen bei 23,4°C und 3 mW für 80 s.

Diese HOT DISK Methode korreliert mit der stationären Methode zur Bestimmung der Wärmeleitfähigkeit (Plattengerät) nach DIN EN 12664:2001-05. Es werden mit der HOT DISK Methode höhere Werte der Wärmeleitfähigkeit als mit dem Plattengerät gefunden. Die Vergleichbarkeit der mittels HOT DISK Verfahren ermittelten Werte der Vergleichsbeispiele und der erfindungsgemäßen Beispiele sind gegeben.

Die Granulate zeigen eine Wärmeleitfähigkeit im Vakuum von ca. 15 mW/(m*K). Die erfindungsgemäßen verdichteten Pulver weisen demgegenüber mit 6,6 - 7,1 mW/(m*K) eine deutlich niedrigere Wärmeleitfähigkeit auf. Die nicht verdichtete Mischung zeigt mit 6,0 mW/(m*K) eine noch etwas geringere Wärmeleitfähigkeit.

### Befüllung eines evakuierbaren Behälters

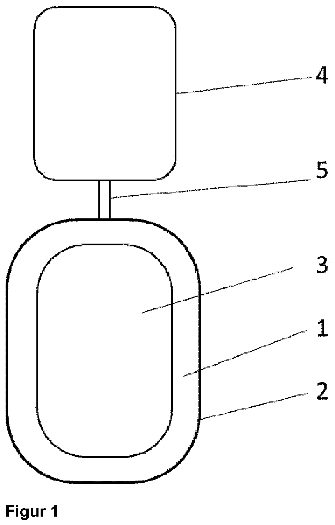

Figur 1 zeigt eine Skizze eines evakuierbaren Behälters mit 1 = Hohlraum, 2 = Aussenbehälter, 3 = Innenbehälter, 4 = Vorlage, 5 = Verbindungsstück. Für die Versuche wurde ein zweidimensionales Modell als evakuierbarer Behälter verwendet. Das verdichtete Pulver aus Beispiel 3 wird in einen Vorlagebehälter überführt und verschlossen. Der Vorlagebehälter wird nachfolgend auf einen Druck von ca. 100 hPa evakuiert. Der verschlossene Vorlagebehälter wird mit dem zu befüllenden, evakuierbaren Behälter über ein Ventil angeschlossen. Der evakuierbare Behälter wird nun auf einen Druck von weniger als 10 hPa evakuiert. Das Ventil wird geöffnet, wodurch das verdichtete Pulver in den evakuierbaren Behälter gesaugt wird. Nach Druckausgleich wird das Ventil geschlossen und evakuierbarer Behälter und Vorlage getrennt.

Es gelingt den evakuierbaren Behälter in weniger als 10 Minuten zu vollständig zu befüllen.

Dagegen gelingt die Befüllung mit dem nicht verdichteten Pulver aus AEROSIL^{®} R 974 und Siliciumcarbid mit einer Stampfdichte von 66 g/l nur unvollständig.

**Tabelle 1: Prozessparameter/physikalische Daten der Granulate**

| **Beispiel** | | **C-1** | **C-2** | **C-3** | **C-4** |
|---|---|---|---|---|---|
| Fraktion [µm] | | 250-600 | 400-1000 | 1000-3000 | 2000-4000 |
| Anpresskraft | kN | 80 | 40 | 30 | 30 |
| Stampfdichte | g/l | 483 | 408 | 346 | 405 |
| Siebanalyse | µm/% | >400/48,7 | > 2000/2,6 | > 2000/21,8 | > 2000/64 |
| | | 315-400/26,6 | 1000-2000/68,4 | 1000-2000/49 | 1000-2000/16 |
| | | 200-315/22,7 | 400-1000/15,8 | 400 -1000/21,8 | < 1000/19 |
| | | <200/1,9 | < 400/13,1 | <400/7,2 | |
| Wärmeleitfähigkeit* | mW/mK | 14 | 14 | 15 | 18 |

| | | | | | |
|---|---|---|---|---|---|
| * bei einem Druck von 0,05 mbar | | | | | |

**Tabelle 2: Prozessparameter/physikalische Daten der verdichteten Pulver**

| **Mischung** | | Nauta-Mischer* | | | |
|---|---|---|---|---|---|
| Mischdauer | min | 60 | | | |
| Reihenfolge Zugabe | | Vorlage AE | | | |
| Dauer Zugabe | min | 15 | | | |
| Ansatzgröße | kg | 187,5 | | | |
| **Beispiel** | | **1** | **2** | **3** | **4** |
| **Verdichtung** | | Vacupress 220/300 | | | |
| Spalt | SKT | 2-4 | | | |
| Vakuum | mbar, abs | 150 | | | |
| Drehzahl Walzen | SKT | 25 | 50 | 25 | 50 |
| Durchsatz | kg/h | 95 | 112 | 88 | 108 |
| Stampfdichte | g/l | 141 | 118 | 139 | 112 |
| Wärmeleitfähigkeit** | mW/mK | 6,7 | 7,1*** | 6,8 | 6,6 |

| | | | | | |
|---|---|---|---|---|---|
| *3 m³, zwei Schnecken, Drehzahl Stufe 2 ** bei einem Druck von 0,05 mbar *** 2,6 mW/mK gemäß DIN EN 12664:2001-05 | | | | | |

## Patentansprüche

1. Verfahren zur Wärmedämmung eines Behälters, der einen evakuierbaren Hohlraum (1) umfasst, wobei der Hohlraum durch einen Aussenbehällter (2) und einen Innenbehälter (3) gebildet wird, umfassend die Schritte
Evakuieren des Hohlraumes auf einen Druck von 100 hPa bis 10⁻⁴ hPa,
Einbringen eines verdichteten Pulvers und
Verschließen des Hohlraumes, wobei
zunächst der Hohlraum (1) evakuiert wird und nachfolgend das verdichtete Pulver in den evakuierten Hohlraum eingebracht wird,
das Einbringen des verdichteten Pulvers in den evakuierten Hohlraum (1) aus einer evakuierten Vorlage (4) erfolgt, in der ein Druck vorliegt, der größer ist als im evakuierten Hohlraum und
das verdichtete Pulver eine hydrophobierte, pyrogene Kieselsäure umfasst und eine Stampfdichte von 100-150 g/l aufweist.

2. Verfahren nach Anspruch 1, **dadurch gekennzeichnet, dass**
das Einbringen in den evakuierten Hohlraum (1) durch Vibration beschleunigt wird.

3. Verfahren nach den Ansprüchen 1 oder 2, **dadurch gekennzeichnet, dass**
die Kieselsäure eine BET-Oberfläche von wenigstens 150 m²/g besitzt.

4. Verfahren nach den Ansprüchen 1 bis 3, **dadurch gekennzeichnet, dass**
die Kieselsäure eine Methanolbenetzbarkeit von wenigstens 20 Vol.-% Methanol aufweist.

5. Verfahren nach den Ansprüchen 1 bis 4, **dadurch gekennzeichnet, dass**
die hydrophobierte Kieselsäure durch Reaktion einer hydrophilen Kieselsäure mit das Organosilan aus der Gruppe bestehend aus Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, mit n = 1-8; R = -H, -CH₃, -C₂H₅; X= -Cl, -Br; -OCH₃, -OC₂H₅, -OC₃H₈, Y= NH, O ausgewählt ist.

6. Verfahren nach den Ansprüchen 1 bis 5, **dadurch gekennzeichnet, dass**
das verdichtete Pulver ein Gemisch einer Kieselsäure und eines IR-Trübungsmittels ist.

7. Verfahren nach Anspruch 6, **dadurch gekennzeichnet, dass**
der Anteil der Kieselsäure 60-90 Gew-.% und des IR-Trübungsmittels.10-40 Gew.-% beträgt.

## Claims

1. Method for thermal insulation of a container comprising an evacuable cavity (1), the cavity being formed by an outer container (2) and an inner container (3), comprising the steps of evacuating the cavity to a pressure of 100 hPa to 10⁻⁴ hPa,
introducing a compressed powder and
closing the cavity, where
first the cavity (1) is evacuated and subsequently the compressed powder is introduced into the evacuated cavity,
the introducing of the compressed powder into the evacuated cavity (1) takes place from an evacuated reservoir (4) wherein the pressure is greater than in the evacuated cavity, and
the compressed powder comprises a hydrophobized fumed silica and has a tamped density of 100 - 150 g/l.

2. Method according to Claim 1, **characterized in that** the introducing into the evacuated cavity (1) is accelerated by vibration.

3. Method according to Claim 1 or 2, **characterized in that**
the silica has a BET surface area of at least 150 m²/g.

4. Method according to Claims 1 to 3, **characterized in that**
the silica has a methanol wettability of at least 20% by volume methanol.

5. Method according to Claims 1 to 4, **characterized in that**
the hydrophobized silica is selected by reaction of a hydrophilic silica with an organosilane from the group consisting of Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, with n = 1-8; R = -H, -CH₃, -C₂H₅; X = -Cl, -Br, -OCH₃, -OC₂H₅, -OC₃H₈; Y = NH, O.

6. Method according to Claims 1 to 5, **characterized in that**
the compressed powder is a mixture of a silica and an IR opacifier.

7. Method according to Claim 6, **characterized in that** the proportion of the silica is 60 - 90% by weight and of the IR opacifier is 10 - 40% by weight.

## Revendications

1. Procédé pour l'isolation thermique d'un récipient qui comprend une cavité (1) pouvant être mise sous vide, la cavité étant formée d'un récipient extérieur (2) et d'un récipient intérieur (3), comprenant les étapes suivantes
mise sous vide de la cavité jusqu'à une pression de 100 hPa à 10⁻⁴ hPa,
introduction d'une poudre comprimée et
fermeture de la cavité, dans lequel
on met d'abord la cavité (1) sous vide, puis on introduit dans la cavité mise sous vide la poudre comprimée,
on procède à l'introduction de la poudre comprimée dans la cavité (1) mise sous vide à partir d'un réservoir collecteur (4) mis sous vide, dans lequel règne une pression supérieure à celle régnant dans la cavité mise sous vide et
la poudre comprimée comprend une silice pyrogène hydrophobisée et présente une masse volumique après tassement de 100 à 150 g/l.

2. Procédé selon la revendication 1, **caractérisé en ce que** l'introduction dans la cavité (1) mise sous vide est accélérée par des vibrations.

3. Procédé selon les revendications 1 ou 2, **caractérisé en ce que** la silice présente une aire BET d'au moins 150 m²/g.

4. Procédé selon l'une des revendications 1 à 3, **caractérisé en ce que** la silice présente une mouillabilité au méthanol d'au moins 20 % en volume de méthanol.

5. Procédé selon les revendications 1 à 4, **caractérisé en ce que** la silice hydrophobisée est choisie par réaction d'une silice hydrophile avec l'organosilane du groupe consistant en Rₙ-Si-X₄₋ₙ, R₃Si-Y-SiR₃, RₙSiₙOₙ, (CH₃)₃-Si-(O-Si(CH₃)₂)ₙ-OH, HO-Si(CH₃)₂-(O-Si(CH₃)₂)ₙ-OH, avec n = 1 à 8 ; R = -H, -CH₃, -C₂H₅ ; X = -Cl, -Br ; - OCH₃, -OC₂H₅, -OC₃H₈, Y = NH, O.

6. Procédé selon les revendications 1 à 5, **caractérisé en ce que** la poudre comprimée est un mélange de silice et d'un opacifiant IR.

7. Procédé selon la revendication 6, **caractérisé en ce que** la proportion de la silice est de 60 à 90 % en poids et celle de l'opacifiant IR de 10 à 40 % en poids.
